# EUROPEAN PATENT APPLICATION

(11) **EP 4 837 892 A1**
(43) Date of publication of application: **11.11.2026**
(21) Application number: 25175409.9
(22) Date of filing: 09.05.2025
(51) Int. Cl.: C04B 28/14, C04B 38/02, C04B 20/10

(54) **WATER-GYPSUM-DISPERSION FOR THE PRODUCTION OF GYPSUM BODIES**

(71) Applicant: PTA Solutions GmbH, 80802 München (DE)
(72) Inventor: GONZENBACH, Urs Thomas, 8107 Schweiz (CH); REICH, Patrick, 80802 München (DE); STURZENEGGER, Philip Noah, 8117 Fällanden (CH)
(74) Representative: Bardehle Pagenberg Partnerschaft mbB Patentanwälte Rechtsanwälte

(57) **Abstract**

The present invention relates to a water-gypsum-dispersion comprising gypsum, a foam formation system comprising a solid particulate composition and at least one chemical blowing agent, water, optionally one or more additives, wherein the gypsum particles are dispersed in the water. The present invention also relates to a method for producing a gypsum body comprising the steps of preparing a water-gypsum-dispersion by mixing gypsum with water, a foam formation system and optionally additives, casting the water-gypsum-dispersion on a conveyor-belt or casting the water-gypsum in a hollow mold, hardening the water-gypsum-dispersion to a gypsum body on the conveyor belt or in the hollow mold and drying the gypsum body. The invention further provides a use of a water-gypsum-dispersion for the production of a foamed gypsum body.

## Description

### Technical field of the invention

The present invention relates to a water-gypsum-dispersion comprising calcined gypsum, a foam formation system comprising a solid particulate composition and at least one chemical blowing agent, water, and optionally one or more additives, wherein the gypsum particles and the solid particulate composition of the foam formation system are dispersed in the water. The present invention further provides a method for producing a gypsum body. The invention also provides a use of a water-gypsum-dispersion for the production of a foamed gypsum body.

### Background of the invention

Gypsum is a material used in building surface products such as gypsum panels. Gypsum is inexpensive and readily available. Furthermore, gypsum can be formed to useful shapes by for example casting, molding, plastic modelling or other means. One useful application is the use of gypsum panels to form interior walls. These gypsum panels or plasterboards include a gypsum body sandwiched between facing sheets of paper or cardboard.

The gypsum core can be a foamed gypsum with a distribution of pores in the gypsum body. The pores help to reduce the weight of the gypsum boards, thereby making the panel lighter and easier to handle. The pores further help to save raw materials, and the energy and CO2 emissions associated with raw material production. In addition, the pores lead to energy savings in the manufacturing process, for example during drying. Finally, the reduced density is the cause for energy savings during transportation and installation. To ensure that the mechanical properties of the gypsum panel, such as mechanical strength, are sufficient for the application it is important to control the size of the pores and the distribution in the foamed part as both can impact not only the weight but also the mechanical properties of the gypsum board.

Mineral foams combine unique properties like low specific weight, thermal, electrical, acoustic insulation, they can exhibit high specific strength and depending on the chemical composition extraordinary thermal and chemical stability. In addition, foam formation is an efficient strategy to save raw materials, energy, CO2 emission, and reduce the weight of components.

Gypsum boards are usually produced by a continuous process. Therefore, the technology used to form a foam and to introduce pores into the gypsum body must ensure that the foam is formed rapidly enough before the boards are shaped, cut, and/or dried.

EP 4 349 555 A1 describes a method of forming a gypsum panel from a porous slurry. The slurry is formed by combining a stucco and water, adding aqueous foam to the stucco and water, stirring the stucco, water, and foam in a mixer. A foam-generating surfactant is used to build the aqueous foam. However, those surfactants are expensive compared to the relatively inexpensive gypsum and the generated foam is stable for only a very short time span (see Maurizio Bellotto "Interactions between admixtures in wallboard production", Global Gypsum, 16 November 2012; Retrieved from Global Gypsum , 16 November 2012; Retrieved from https://www.usg.com/content/dam/USG_Marketing_Communications/united_states /product_promotional_materials/finished_assets/usg-hydrocal-A-11-Gypsum-Cement-Submittal-en-IG1390.pdf). The final pore size cannot well be tuned although this is crucial to ensure defined board properties, in particular board strength. Admixing the foam introduces excess water to the slurry that adds to the energy consumption and CO₂ emission of the drying process and reduces mechanical strength. The slurry is formed using one mixer, thus, the dispersion of the gypsum particles in water and the process of rendering the gypsum slurry porous cannot be controlled independently of each other.

It is an object of the present invention to overcome these drawbacks of the prior art and to provide a water-gypsum-dispersion that allows reliable foam formation from various minerals and especially from building material formulations. In particular, it is an aim of the present invention to increase the control over pore size, the process robustness and product reliability and to enable foam formation adjustable to the continuous gypsum board production.

### Summary of the invention

These objectives are achieved by the water-gypsum-dispersion as defined in claim 1, the method as defined in claim 13 and the use as defined in claim 15.

Further aspects of the invention are disclosed in the specification and the dependent claims.

In a first aspect, the invention relates to a water-gypsum-dispersion comprising
- 50 - 75 % by wt. gypsum, preferably calcined gypsum,
- a foam formation system comprising a solid particulate composition and at least one chemical blowing agent,
- water,
- optionally one or more additives,

wherein the gypsum particles and the solid particulate composition are dispersed in the water. The solid particulate composition comprises
   (a) catalytically active particles and
   (b) partially hydrophobized foam stabilizing particles,
wherein the catalytically active particles (a) are selected to react with the chemical blowing agent to form a gas, and
   - wherein the partially hydrophobized particles (b) are selected from the group consisting of oxides, hydroxides, carbides, sulfates, nitrides, phosphates, carbonates, silicates (b.1), and
   - wherein the partially hydrophobized particles (b) are obtained by modifying the surface of particles (b.1) with amphiphilic molecules (b.2) comprising at least a head group and a tail group,
wherein the amount of (b) in the solid particulate composition is in the range of 20.0-99.8% and/or the amount of (a) is in the range of 0.2-80.0%, preferably the amount of (b) is in the range of 60.0-99.8% and/or the amount of (a) is in the range of 0.2-40.0%, most preferably the amount of (b) is in the range of 70.0-99.8% and/or the amount of (a) is in the range of 0.2-30.0%. The catalytically active particles are a mixture of a first catalyst with a second co-catalyst, wherein the first catalyst is a metal oxide, a metal hydroxide, a metal carbonate, a metal salt or a mixture thereof, preferably selected from the group consisting of manganese oxides, iron oxides, and mixtures thereof, the second co-catalyst is selected from the group consisting of permanganates, alkali metal halides, enzymes, and mixtures thereof, and the co-catalyst is present in an amount of 0.5 % by wt. to 80 % by wt. based on the total amount of the catalytically active particles (a).

In another aspect, the invention relates to a method for producing a gypsum body comprising the steps of preparing a water-gypsum-dispersion according to any one of the preceding claims by mixing gypsum with water, a foam formation system and optionally additives, casting the water-gypsum-dispersion on a conveyor-belt or casting the water-gypsum-dispersion in a hollow mold, hardening the water-gypsum-dispersion to a gypsum body on the conveyor belt or in the hollow mold and drying the gypsum body.

In another aspect, the invention relates to a use of a water-gypsum-dispersion according to anyone of the preceding claims for the production of a foamed gypsum body, preferably for the production of gypsum cores, plaster boards, and wall elements.

The present invention will be described in more detail below. It is understood that the various embodiments, preferences and ranges as provided / disclosed in this specification may be combined at will.

### Detailed description of the invention

### Definitions

Unless otherwise stated, the following definitions shall apply in this specification:
The term "dispersion" is used to mean a system in which particles of one substance are distributed throughout another substance, the continuous phase. Water acts as the continuous phase or dispersing medium in which particles are dispersed.

The terms "comprise" and "comprising" are used in the inclusive, open sense, meaning that additional elements may be included. It is not intended to be construed as "consists of only". Throughout this specification unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "included but not limited to". "Including" and "including but not limited to" are used interchangeably.

The terms "consist of" and "consisting of" are used, if no further elements are present in the product apart from the ones following said wording.

All percentages hereinafter refer to weight percentage, i.e. % by weight, unless otherwise defined.

### Gypsum

The gypsum included in the water-gypsum-dispersion can be anhydrous gypsum or hemihydrates, and is typically added as a powder. Stucco can also be used.

Gypsum powder is understood here to be a quantity of gypsum particles, which preferably have a median diameter of 0.2 - 45 micrometers.

The gypsum body comprises a porous gypsum-based material. In this context, gypsum is understood to mean the mineral CaSO4*2H₂O, the dihydrate in the finished gypsum body. In addition to gypsum, the gypsum body may also contain other substances, e.g. other inorganic materials such as minerals like quartz, aluminum oxide, aluminum hydroxide, calcium carbonate, magnesium hydroxide, unexpanded perlite or vermiculite or clay.

To prepare the gypsum for the use in the dispersion, crushed natural gypsum or synthetic gypsum like REA gypsum can be heated or calcined to dehydrate the feedstock. The gypsum for the use in the dispersion may contain 0.5 - 80.0% or 1 - 50% or 1 - 20% of calcined recycled gypsum, stemming from sources like recycled gypsum boards or any other source that is suited for recycling.

The water-gypsum-dispersion, which is also referred to as a gypsum slurry, comprises 50 -75 % by wt., preferably 55 - 75 % by wt., and more preferably 55 - 68 % by wt. of calcined gypsum, and alternatively 50 - 66 % by wt. of calcined gypsum.

The percentage of the mass of all sulfate compounds, like for example anhydrous calcium sulfate, calcium sulfate hemihydrate, calcium sulfate dihydrate, is at least 70%, preferably at least 80%, based on the total weight of gypsum used for the preparation of the water-gypsum-dispersion.

### Foam formation system

The water-gypsum-dispersion comprises a foam formation system. The foam formation system comprises a solid particulate composition and at least one chemical blowing agent. The foam formation system may be a 2-component system or a one component system. If the foam formation system is a 2-component system one component may be the solid particulate composition and the second component may be a blowing agent. The blowing agent may be present in liquid form.

The solid particulate composition comprises (a) catalytically active particles and (b) partially hydrophobized particles, wherein the catalytically active particles (a) are selected to react with the chemical blowing agent to form a gas.

The amount of (b) partially hydrophobized particles in the solid particulate composition is in the range of 20.0-99.8% and/or the amount of (a) catalytically active particles in the solid particulate composition is in the range of 0.2-80%.

In one embodiment, the amount of (b) in the solid particulate composition may be in the range of 20.0-99.8% and/or the amount of (a) may be in the range of 0.2-80.0%, preferably the amount of (b) in the range of 60.0-99.8% and/or the amount of (a) in the range of 0.2-40.0%, most preferably the amount of (b) is in the range of 70.0-99.8% and/or the amount of (a) is in the range of 0.2-30.0%.

The foam formation system is present in the water-gypsum-dispersion in an amount of between 0.1 % by wt. to 20.0 % by wt., preferably between 0.2 % by wt. to 12.0 % by wt., more preferably between 0.2 % by wt. to 6.0 % by wt., and even more preferably between 0.5 % by wt. to 3.0 % by wt., based on the total weight of the water-gypsum-dispersion.

Expressed in percent per volume of the water-gypsum-dispersion, the foam formation system is present in the water-gypsum-dispersion in an amount of between 0.1 vol% to 15.0 vol%, preferably 0.2 - 10.0 vol%, and more preferably 0.4 - 7.0 vol%. The foam formation system or one component of the foam formation system, the solid particulate composition, can be a powder, preferably with a particle size from 30 nm to 500 µm, preferably 30 nm to 300 µm, more preferably 100 nm to 100 µm, and even more preferably 500 nm to 50 µm and most preferably 500 nm to 20 µm or the foam formation system or the solid particulate composition of the foam formation system can be a granulate, preferably with a particle size from 0,5 mm - 20 mm. It was found that the particle size distribution is of less importance. Good foams can be obtained with narrow as well as with broad particle size distribution.

The foam formation system or one component of the foam formation system is dispersed in the dispersing medium.

The solid part of the foam formation system is preferably a powder. As it is a dry, homogeneous substance, it is stable and exhibits long shelf life.

In case the blowing agent is not stable if stored together with the catalytically active particles, the foam formation system may be provided in a 2-component configuration in which all components are stable and exhibit long shelf life.

In one preferred embodiment the foam formation system comprises the 0.02-fold to 3.00-fold amount of catalytically active particles (a) based on the amount of the blowing agent, preferably the 0,05-fold to 1.00-fold amount, more preferably the 0.1 - 0.7-fold amount.

In one embodiment the foam formation system comprises the 0,01-fold to 2.00-fold amount of the first catalyst based on the amount of the blowing agent, preferably the 0,01-fold to 1.00-fold amount, more preferably the 0,04-fold to 0.60-fold amount, even more preferably the 0,04-fold to 0.40-fold amount.

In one embodiment the foam formation system comprises the 0,01-fold to 3.00-fold amount of the second co-catalyst based on the amount of the blowing agent, preferably the 0,01-fold to 2.00-fold amount, more preferably the 0,02-fold to 1.00-fold amount, and most preferably the 0,04-fold to 0.60-fold amount.

The foam formation system may comprise the 0,01-fold to 70.00-fold amount of the first catalyst based on the amount of the second co-catalyst, preferably the 0,05-fold to 52.00-fold amount, more preferably the 0,05-fold to 10.00-fold amount, and most preferably the 0,10-fold to 4.00-fold amount.

In one preferred embodiment the foam formation system comprises between 3 to 65 % by wt. of the first catalyst, between 0.2 to 40 % by wt. of the second co-catalyst and between 30 and 95 % by wt. of the blowing agent, wherein the components first catalyst, second co-catalyst, and blowing agent add up to 100 % by wt.. Preferably the foam formation system comprises between 5 to 35 % by wt. of the first catalyst, between 4 to 35 % by wt. of the second co-catalyst and between 59 and 90 % by wt. of the blowing agent. Alternatively, the foam formation system comprises between 6 to 22 % by wt. of the first catalyst, between 4 to 30 % by wt. of the second co-catalyst and between 64 and 90 % by wt. of the blowing agent.

It has been found that the ratio of catalyst to co-catalyst influences the foaming time, meaning the reaction time of the decomposition of the blowing agent and that the use of a co-catalyst usually leads to a decrease in foaming time. In addition, the ratio of the catalyst to the blowing agent also has a noticeable impact on the foaming time and the onset of the foam formation.

### Catalytically active particles

The foam formation system includes a solid particulate composition. Component (a) of the solid particulate composition are catalytically active particles. The catalytically active particles are a mixture of a first catalyst with a second co-catalyst. The second co-catalyst is different from the first catalyst.

The first catalyst is a metal oxide, a metal hydroxide, a metal carbonate, a metal salt, or a mixture thereof selected from the group consisting of manganese oxides, iron oxides, and mixtures thereof.

The second co-catalyst selected from the group consisting of permanganates, alkali metal halides, enzymes and mixtures thereof is present in an amount of 0.5 % by wt. to 80 % by wt., preferably in an amount of 0.5 % by wt. to 75.0 % by wt., and particularly preferably in an amount of 0.5 - 60.0 % by wt., based on the total amount of the catalytically active particles (a).

In one embodiment the second co-catalyst is present in an amount of 15 % by wt. to 80 % by wt., more preferably 20 to 75 % by wt., most preferably 20 to 50 % by wt. In another embodiment the second co-catalyst is present in an amount of 2 % by wt. to 50 % by wt., 5 to 38 % by wt., most preferably 5 to 28 % by wt., based on the total amount of the catalytically active particles (a). In another embodiment the second co-catalyst is present in an amount of 0.5 % by wt. to 80.0 % by wt., 2 to 75 % by wt., most preferably 2 to 60 % by wt., based on the total amount of the catalytically active particles (a).

The first catalyst may be selected from manganese oxide (IV) MnO2, manganite MnO(OH), iron (III) hydroxide oxide FeO(OH), iron (III) oxide Fe2O3, iron (II) carbonate FeCO3, copper (I) oxide Cu2O, iron(II) titanate FeTiO3, also known as ilmenite, zinc orthosilicate Zn₂SiO₄, magnesium carbonate MgCO₃, aluminum hydroxide Al(OH)₃, titanium dioxide TiO₂, and mixtures thereof. In one embodiment the first catalyst is selected from manganese oxide (IV) MnO2, either synthetically produced MnO2 or naturally occurring mineral MnO2, manganite MnO(OH), and mixtures thereof. In a further embodiment, the first catalyst is selected from manganese oxide (IV) MnO2, either synthetically produced MnO2 or naturally occurring mineral MnO2.

The second co-catalyst may be selected from the group consisting of potassium permanganate, potassium iodide, catalase, preferably catalase from Micrococcus lysodeikticus (CAS-Nummer: 9001-05-2), sodium permanganate, calcium permanganate, ammonium permanganate, magnesium permanganate and mixtures thereof, wherein the second co-catalyst is different from the first catalyst, preferably the second co-catalyst is potassium permanganate, sodium permanganate, potassium iodide or catalase. In a further embodiment the second co-catalyst is a permanganate, preferably potassium permanganate, sodium permanganate or a mixture thereof. In a further embodiment the second co-catalyst is a potassium iodide. In a further embodiment the second co-catalyst is a catalase. In one preferred embodiment the first catalyst is manganese oxide (IV) MnO2 and the second co-catalyst is selected from calcium permanganate, potassium permanganate, sodium permanganate, potassium iodide or catalase.

In another preferred embodiment the second co-catalyst is a permanganate, preferably potassium permanganate, sodium permanganate, calcium permanganate or a mixture thereof and the first catalyst is manganese oxide (IV) MnO2.

In a further advantageous embodiment, the invention relates to a composition wherein the amount of the catalytically active particles in the water-gypsum-dispersion is in the range of between 0.01 to 2.00 % by wt., preferably 0.01 to 1.00 % by wt., more preferably 0.03 to 0.50 % by wt..

### Partially hydrophobized foam stabilizing particles

The partially hydrophobized foam stabilizing particles (b), short partially hydrophobized particles, are selected from the group consisting of oxides, hydroxides, carbides, sulfates, nitrides, phosphates, carbonates and silicates (b.1). The partially hydrophobized foam stabilizing particles (b) are obtained by modifying the surface of the particles (b.1) with amphiphilic molecules (b.2) comprising at least a head group and a tail group. The partially hydrophobized particles (b) are particles (b.1), the surface of which is modified with amphiphilic molecules (b.2) comprising at least a head group and a tail group. The amphiphilic molecules (b.2) adhere to the surface of particles (b.1) resulting in partially hydrophobized particles (b).

The term partially hydrophobized particles denotes particles that form a contact angle of 55 - 85° with the gas to water-gypsum-dispersion interface at the time of foam formation. The contact angle is the angle enclosed by the interface particle to water-gypsum-dispersion and the interface water-gypsum-dispersion to gas with the angle opening in the direction of the water-gypsum-dispersion.

According to a preferred aspect, the tail group has a length of less than 18 C-atoms, preferably less than 13 C-atoms, optionally plus an ester linkage. The tail group preferably is a short chain with a length of 4 to 12, preferably 4 - 9 C-atoms, more preferably 4 - 8 C-atoms, optionally plus an ester linkage.

According to a particularly preferred aspect, the tail group has a length of 4 - 9 C atoms, optionally plus an ester compound. Such a short-chain tail group reduces the tendency to form bonded pairs of amphiphiles or micelles. Such pairs or micelles do not contribute to the hydrophobization of the particles (b.1) and are therefore undesirable. In the case of molecules with a longer tail group, as is common in surfactants, the formation of micelles in particular would be preferred, and long-chain surfactants therefore have less, too little or no hydrophobizing effect.

According to a preferred aspect, the tail group is selected from the group consisting of alkyl group, non-aromatic hydrocarbon ring such as alicyclic group, aromatic group. Preferably the tail group is an alkyl group, particularly preferably selected from the group consisting of butyl, pentyl, hexyl, heptyl or octyl, optionally plus an ester compound.

Preferably, the tail group has no branches of more than 3 atoms in length, particularly preferably no branches of more than 1 atom in length, and most preferably no branches at all.

In these considerations, H atoms are not to be taken into account, so that a branching with a CH₃ group, for example, is to be regarded as a branching of 1 atom in length. Overall, the amphiphilic molecule preferably has exactly one hydrocarbon chain, the hydrocarbon chain preferably being unbranched. The amphiphilic molecule may consist of a head group as a hydrophilic end and a hydrocarbon chain as a hydrophobic end, and wherein the hydrophobic end has a molecular mass of less than 300 g/mol.

According to one aspect, the critical micelle concentration of the amphiphilic molecule (b.2) used is therefore typically greater than 10, preferably greater than 100 µmol/l. According to a further aspect, the solubility of the amphiphilic molecules in water is greater than 1 µmol/l.

According to a preferred aspect, the amphiphilic molecule (b.2) has a molecular mass of between 45 g/mol and 285 g/mol. Amphiphilic molecules according to the invention have a molecular mass of less than 300 g/mol, preferably less than 200 g/mol, more preferably less than 160 g/mol or less than 120 g/mol.

According to one aspect, the partially hydrophobized particles are previously hydrophobized particles. This means that the particles (b.1) get partially hydrophobized before they are added to a dispersing medium.

According to a preferred aspect, the concentration of the partially hydrophobized particles in the water-gypsum-dispersion is 0.05 to 10.00 %, preferably 0.1 to 7.0 %, more preferably 0.1 - 4.0 %, and particularly preferably 0.1 - 1.0.

The particles (b.1) are selected from the group consisting of oxides, hydroxides, carbides, sulfates, nitrides, phosphates, carbonates, silicates.

In a further embodiment, the particles (b.1) include oxides, including pure and mixed metal oxides, selected from the group consisting of aluminum oxides, including Al-Mg spinels, silicon dioxides, zirconium dioxides, and zinc oxides, particularly aluminum oxide, silicon dioxide, and zirconium dioxide.

In a further embodiment, the particles (b.1) are selected from the group of aluminum oxide, silicon dioxide, and calcium carbonate.

According to a preferred aspect, the median diameter of the partially hydrophobized particles is 0.02 - 20.00 µm, preferably 0.03 - 10.00 µm, more preferably 0.05 - 5.00 µm, and particularly preferably 0.1 - 5.0 µm. Preferably, the partially hydrophobized particles have an average aspect ratio (ratio of longest to shortest diameter) of less than 5, preferably less than 3, particularly preferably less than 2.

In one embodiment the tail group of the amphiphilic molecules (b.2) is selected from an aliphatic group or an aromatic group or a cyclic group having 2 to 18 carbon atoms, preferably 2 to 12 carbon atoms, particularly preferably 2 to 8 carbon atoms, and optionally one or more substituents and that the head group of the amphiphilic molecules is selected from phosphates, phosphonates, sulphates, sulphonates, alcohols, amines, amides, pyrrolidines, gallates, carboxylic acids and the amount of amphiphilic molecules (b.2) on the particles (b.1) is in the range of 0.5 - 160.0 µmol (b.2) / m² particle (b.1), preferably 1 - 56 µmol (b.2) / m² particle (b.1) more preferably 1 - 28 µmol (b.2) / m² particle (b.1) and even more preferably 3.5 - 28.0 µmol (b.2) / m² particle (b.1).

In a particular embodiment, the head group of the amphiphilic molecules is selected from amines, gallates, and carboxylic acids.

The amphiphilic molecules comprise a hydrophilic head group, which is polar, and a hydrophobic tail group, which is mainly non-polar, or consists of these.

The hydrophilic head group may have a positive or negative charge (where charge also includes a partial charge, such as a certain electronegativity of the head group). Preferably, the head group is ionized.

Preferably, the charge of the head group is chosen contrary to the charge on the particle surface and as a function of the pH value of the dispersion. A sufficiently strong charge of the head group is required so that the head group can successfully displace the water from the surface of the particles (b.1) dispersed in the water and have a hydrophobizing effect on the particles (b.1). Only then does the hydrophobizing additive (b.2) attach to the particles (b.1) with the head group and can partially hydrophobize their surface by means of the tail group.

The following considerations ensure that the charge of the head group is sufficiently strong to fulfill this condition.

According to a preferred aspect, for electrostatically adsorbing amphiphiles, at least half of the head groups are charged at the processing pH of the dispersion. This ensures effective hydrophobization. At the processing pH of gypsum slurries of 6 - 8, the hydrophobization of particles (b.1) is particularly effective if the head group of the amphiphiles (b.2) and the surface of the particles (b.1) are oppositely charged.

In the case of negatively charged particles (b.1), the negative logarithm of the acid constant, pKs, of the hydrophobizing additive (b.2) in protonated form is preferably greater than 10. In case of positively charged particles (b.1), the negative logarithm of the acid constant, pKs, of the hydrophobizing additive (b.2) is preferably lower than 5. This ensures that more than half of the head groups of the amphiphilic molecules (b.2) are protonated (bases) or deprotonated (acids) at the processing pH (6 - 8).

According to a preferred aspect, the head group of the amphiphilic molecule (b.2) comprises at least one element selected from the group consisting of carboxy group, gallate group, amine group, sulfate group, phosphate group, alcohol group, and pyrrole group.

The tail group of the hydrophobizing additive (b.2) is hydrophobic. Preferably, the tail group comprises a chain of C-atoms, in particular the tail group can be a hydrocarbon chain. In addition, the tail group may optionally have an ester compound via which it is coupled to the head group.

### Blowing Agent

The foam formation system further comprises a chemical blowing agent. The blowing agent is a substance that can be decomposed to release a gas, creating bubbles within the material.

The chemical blowing agent is preferably selected from hydrogen peroxide (H₂O₂), peroxo compounds which release oxygen in the presence of a catalyst, alkali metal peroxides, alkaline earth metal peroxides, carbonates and hydrogen carbonates, preferably selected from hydrogen peroxide, sodium carbonate, and sodium hydrogen carbonate.

If the blowing agent is hydrogen peroxide all amounts given herein refer to an aqueous peroxide solution containing 50 % by wt. of hydrogen peroxide.

The blowing agent reacts with the catalytically active particles (a) to release a gas and, in presence of partially hydrophobized foam stabilizing particles (b), form a foam. This means that macropores in the gypsum body are formed by a foaming process. The catalyst is added to the foam formation system to decompose the peroxide or other chemical blowing agents.

### Preparation of the solid particulate composition of the foam formation system

The solid particulate composition can be prepared by different methods.

In one embodiment, the solid particulate composition is prepared by blending particles (b.1), amphiphilic molecules (b.2) and catalytically active particles (a) plus optionally additional additives in a suitable apparatus until a homogeneous mix is achieved. Accordingly, the method comprises the step of combining the raw materials in the appropriate amounts to obtain the solid particulate composition as described herein.

The combination of the raw materials may be accomplished by known methods. A suitable method includes supplying the raw materials to a ball mill and blending the materials for a prolonged period of time. A suitable mixing time is from 1 - 100 hrs, preferably 12 - 24 hrs, or 2 - 16 hrs. In an advantageous embodiment, the method is performed dry, i.e. without adding solvents to the reaction system.

In another embodiment, the solid particulate composition is prepared in-situ during the production of the water-gypsum-dispersion. The particles (b.1) and the amphiphilic molecules (b.2) are blended to prepare partially hydrophobized particles (b). The partially hydrophobized particles (b) and the catalytically active particles (a) are added to the gypsum powder and/or the water without premixing them. Thus, the solid particulate composition is formed during mixing with the gypsum powder and/or the water.

### Additives

The water-gypsum-dispersion may comprise one or more additives. The additives are preferably selected from the group consisting of pH adjusting agents, additives for mechanical reinforcement, fire retardants, dispersing agents, additives against positive or negative thermal expansion, additives to delay or accelerate the setting reaction and/or additives to reduce the setting expansion.

Additives include accelerators and retarders to setting reactions of hydratable materials. Examples for accelerators of the hydration reaction include calcium sulfate dihydrate, calcium salts, such as calcium chloride and calcium nitride, lithium salts, lithium hydroxide, gypsum and triethanolamine. Examples for retarders of the hydration reaction include citric acid, cellulose, Retardan^{®} by Sika, sugars, tartaric acid and its salts.

Additives further include pH adjusting agents. Suitable pH adjusting agents for pH control include hydrochloric acid, nitric acid, alkali metal hydroxides, such as sodium hydroxide (NaOH) or potassium hydroxide (KOH), ammonia, and triethanolamine, Portland cement or similar suitable substances.

Additives further include dispersing aids, for example polycarboxylic ethers, melamine sulfonate, naphthalene sulfonate and lignin sulfonates.

Additives further include rheology modifiers, for example cellulose and cellulose derivatives, polyvinyl alcohol, polyethylene imine, polyethylene oxide, polyethylene glycol, xanthan gum, bentonite, microsilica and fine calcium carbonates.

In a further advantageous embodiment, the invention relates to a composition wherein the amount of the one or more additives is in the range of 0 - 8 %, preferably 0 - 4 %, more preferably 0 - 2 %, and even more preferably 0 - 1% in respect to the water-gypsum-dispersion.

### Water-gypsum-dispersion

The water-gypsum-dispersion according to the invention is a dispersion. The dispersion is a system in which gypsum particles are distributed throughout water, which acts as the continuous phase. In particular, the water-gypsum-dispersion is a suspension. In this type of dispersion, the gypsum particles are dispersed in water, but they are large enough to eventually settle out over time if left undisturbed. This makes it a heterogeneous mixture, where the solid particles are not dissolved but suspended in the liquid medium water.

In one embodiment, the amount of gypsum, partially hydrophobized particles, catalytically active particles, blowing agent, water and additives sum up to 100%.

In one embodiment the water-gypsum-dispersion consists of
- 50 - 75 % by wt. calcined gypsum,
- a foam formation system comprising the particulate composition, and at least one blowing agent,
- water,
- optionally one or more additives,
wherein the components add up to 100 % by wt..

For preparing the water-gypsum-dispersion, gypsum, preferably calcined gypsum, is mixed with water, one or more components of the foam formation system, preferably the solid particulate composition of the foam formation system, and optionally additives to form a dispersion. Based on the setup of the process the components of the foam formation system are added in several steps or simultaneously.

According to one aspect, the amount of water in the water-gypsum-dispersion is 25 %-100 %, preferably 30 % - 80 % of the dry weight of all solids added. According to a further aspect, the amount of water added is 25 % - 100 %, preferably 30% - 80 % of the dry weight of the gypsum powder.

According to one aspect, the water to solids ratio in the water-gypsum-dispersion is 0.25 - 1.00, preferably 0.3 - 0.8. According to a further aspect, the water to gypsum ratio is 0.25 - 1.00, preferably 0.3 - 0.8.

According to one aspect, the water-gypsum-dispersion to be processed has a pH value of 6 - 10, preferably 6 - 8, particularly preferably 6.8 - 7.4.

As used herein, water is generally to be understood as a water-based liquid, which may also contain other additives, such as pH regulating agents. The water may be purified water, distilled water, or tap water.

The gypsum body produced with the water-gypsum-dispersion according to the invention contains the remains and/or chemical products of the catalytically active particles (a) after reaction with the blowing agent, the partially hydrophobized particles (b) with the amphiphilic molecules (b.2), and the additives.

### Preparation of a foamed gypsum body

According to a first embodiment, the water-gypsum-dispersion is produced by first preparing the solid particulate composition. Particles (b.1) are placed in a mixing vessel. Catalytically active particles (a) and the amphiphilic molecules (b.2) are added, as well as optionally a second co-catalyst and optionally one or more additives. The components are mixed until homogeneous. The mixing vessel is, for example, a ball mixer with ceramic balls or a plowshare mixer. The result is a dry mixture; although the amphiphilic molecules are liquid, the quantity added is too small to produce a paste or similar. The product is then removed from the mixing vessel and processed further. It can either be premixed with the gypsum powder in a dry mixer or added directly to the mixing water during suspension production, either before, during, or after addition of the gypsum powder.

This is followed by suspension production and foam production. For this purpose, mixing water is placed in a container. Gypsum and the solid particulate composition are added and stirred with a suitable stirring device until a homogeneous suspension is produced. The stirring time depends on the efficiency of the stirring tools, typical mixing times are e.g. 1 to 2 minutes. The blowing agent is added to the homogeneous suspension and the suspension is further homogenized; only short homogenization times of e.g. a few seconds are necessary. Once the blowing agent is sufficiently well homogenized into the water-gypsum-dispersion, the gypsum slurry is poured into a mold or onto a conveyor belt.

According to a further embodiment for producing the water-gypsum-dispersion, the solid particulate composition is produced in-situ. In a first step, particles (b.1) are placed in a mixing vessel. The amphiphilic molecules (b.2) are added. The components are mixed until a homogeneous mixture is achieved. The result is a dry mixture; although the amphiphilic molecules are liquid, the quantity added is too small to produce a paste or similar. The partially hydrophobized particles (b) are then removed from the mixing vessel and processed further. The particles (b) can either be premixed with the gypsum powder in a dry mixer or added directly to the mixing water during suspension production.

In a next step, gypsum powder, the partially hydrophobized particles (b) from the first step and catalytically active particles (a), and optionally one or more additives, are added to a mixing vessel. The components are dry-mixed until they are homogeneous, resulting in a dry pre-mixture. Mixing takes place in a suitable mechanical mixer such as, for example, a mortar mixer or plowshare mixer.

This is followed by suspension and foam production. For this purpose, mixing water is placed in a container. If a co-catalyst is used, this can be added to the mixing water together with any other additives such as retarders or liquefiers; the mixture is homogenized until the added substances are dissolved. The dry pre-mixture is added to the mixing water or the water mixture and stirred with a suitable stirring device until a homogeneous suspension is formed. The blowing agent is added to the homogeneous suspension and homogenized further; only short homogenization times of e.g. a few seconds are necessary. Once the blowing agent is sufficiently well homogenized into the water-gypsum-dispersion, the gypsum slurry (expanding suspension) is poured into a mold or onto a conveyor belt.

### Method for producing a gypsum body

One aspect of the invention relates to a method for producing a gypsum body comprising the steps of
- preparing a water-gypsum-dispersion according to the invention by mixing gypsum, preferably calcined gypsum, with water, a foam formation system and optionally additives,
- casting the water-gypsum-dispersion on a conveyor-belt or casting the water-gypsum-dispersion into a hollow mold,
- hardening the water-gypsum-dispersion to a gypsum body on the conveyor belt or in the hollow mold and
- drying the gypsum body.

The term conveyor belt includes one or more conveyor belts and conveyor belts which are part of a conveyor line.

In one embodiment the method is used to produce gypsum plasterboards. A water-gypsum-dispersion is prepared as described herein. The dispersion is fed between continuous layers of paper on a conveyor belt, which can be part of a conveyor line.

As the wet gypsum board travels the length of a conveyor belt or conveying line, the calcium sulfate hemihydrate combines with the water in the slurry to form solid calcium sulfate dihydrate, or gypsum, resulting in a rigid board. The paper becomes chemically and mechanically bonded to the gypsum body, which forms the core. The gypsum board is then cut to length and conveyed through dryers to remove any free moisture. The gypsum board may be dried by direct contact with hot combustion gases or by indirect steam heating.

The conveyor belt can have a belt speed of 30 to 120 meters per minute, preferably 60 - 100 meters per minute.

The production of gypsum bodies, especially gypsum plasterboards using a conveyor belt, is a continuous process, therefore, the reaction speed of the agents of the foam formation system is important. This is different from the manufacturing of other foamable materials which are produced in a batch process. The foam formation system needs to assure close to 100% gas release, for example 98% of gas release, and the stabilization of the gas in the water-gypsum-dispersion in the shape of small bubbles within a short time interval of 1 - 60 s, preferably 1 - 30 s, more preferably 1 - 10 s, and even more preferably within 1 - 5 s. Thus, using the water-gypsum-dispersion according to the invention, a high speed of the conveyor belt is possible while a stable wet foam is produced. Due to the nature of the partially hydrophobized particles, stable and even sized bubbles are formed which leads to a gypsum material with a uniform microstructure and defined properties even if produced at high speed.

The gypsum body produced according to the invention comprises a proportion of inorganic material of at least 90 %, preferably of at least 96 %, and particularly preferably of at least 99 % or even 99.5 %.

Various operating parameters influence the characteristics of the gypsum body that is formed from the water-gypsum-dispersion. For example, the weight percent of each of the constituents of the dispersion influence the characteristics of the gypsum body. The volume of the macropores within the set gypsum body be determined, in part, based on the quantity of foam formation system that is added to the slurry. It can even be stated that the volume of the macropores within the set gypsum body is determined by the composition and quantity of the foam formation system that is added to the slurry.

The preparation of the water-gypsum-dispersion may include several steps. In a first step, the gypsum powder is prepared and dispersed in water. The water may already contain other substances and/or additives e.g. any additives described herein and/or be mixed with other liquids. The gypsum powder may be provided from multiple containers and/or in multiple steps and may comprise several different types of gypsum powder. The gypsum powder also is not necessarily pure gypsum powder but may already be mixed with other additives or substances, e.g. with any additives or substances described herein.

Dispersing the gypsum powder in water can be achieved by any dispersing process, such as by feeding a continuous flow of gypsum powder into the flowing water, or by mixing the gypsum powder into a container filled with standing water. The mixing ratio of water to gypsum or liquid to gypsum varies for different gypsums and is adjusted so that a concentrated dispersion is produced, which is still pourable.

Simultaneously with the gypsum powder or in a next step after dispersing the gypsum powder, a foam formation system is provided. The provision of the foam formation system can take place in various ways, some of which are described below by way of example. The foam formation system may be a 2-component system or a one component system. If the foam formation system is a 2-component system one component may be the solid particulate composition and the second component may be a blowing agent. The blowing agent may be present in liquid form.

In a further step, the water-gypsum-dispersion is foamed, forming a wet foam. Foaming is achieved by the decomposition of the chemical blowing agent, such as hydrogen peroxide (H₂O₂), in the presence of the partially hydrophobized foam-stabilizing particles (b). By introducing suitable amounts of gases in this step, a dispersion containing partially hydrophobized particles is converted into a stable wet foam by adsorption of these particles at the gas-water interface.

In a further step, the wet foam sets, whereby the wet foam hardens to form the gypsum body, and the stabilized air bubbles form macropores in the gypsum body.

The gypsum body is subsequently dried.

In the processing of gypsum into porous gypsum bodies, the stability of the wet foam plays a particularly important role for quality and product safety. Only with very high wet foam stability can it be guaranteed that fluctuating cycle times and variation in the raw material quality, as can occur in production, do not lead to unintentional changes in the dimensions of the wet component, the microstructure or even the formation of cavities or blowholes.

To achieve a stable wet foam, the foam formation system in the water-gypsum-dispersion is of importance, as it stabilizes the gas - water or gas - water-gypsum-dispersion interface. Without being bound to this theory, stabilization is achieved as follows: Due to their partial hydrophobicity, the partially hydrophobized particles preferentially adhere to the surface of the gas bubbles of the wet foam, i.e. at the interface between the dispersion and the gas-filled interior of the bubbles. The partially hydrophobized particles support the formation of small, homogeneously distributed gas bubbles and stabilize the formed bubbles highly efficiently. By attaching the partially hydrophobized particles to the bubbles, the free energy of the system is greatly reduced. From this and from the fact that the partially hydrophobized particles form a robust shell around the bubbles and effectively keep the interfaces between adjacent bubbles at a distance, it becomes apparent that particle-stabilized foams do not exhibit the usual decomposition processes such as dewatering, i.e. phase separation foam - dispersion, pore growth through coalescence or Ostwald ripening, or do so at a significantly slower rate.

Wet foams usually are inherently unstable, i.e. they are subject to progressive decay processes that start from the time the foams are formed. In contrast, the method according to the invention ensures such excellent control of the microstructure through the use of the foam formation system and the inorganic foam stabilizers contained therein. This makes it possible for a wet foam produced with the specified density and pore size to remain reliably stable until solidification and to avoid a critical degree of dewatering, i.e. phase separation foam - dispersion, or pore growth due to coalescence or Ostwald ripening. Particle-stabilized wet foams are much more stable than foams stabilized by surface-active substances such as surfactants.

It has been shown that particle-stabilized wet foams even retain their microstructure set during production for several days. This ensures that the microstructure set during foam formation does not change significantly over the duration of the downstream process steps until the porous gypsum body is finished. The properties of the foam and the pores formed by the process are also uniform over the entire body, i.e. essentially gradient-free. As a result of this high stability, reproducibility and uniformity of the foam and the resulting microstructure, the use of particle stabilization leads, for example, to exceptionally safe porous fire protection materials or, for example, it leads to other gypsum products with exceptionally well defined properties.

"Macropores", as this term is used herein, are the pores in the foam that originate from the action of a blowing agent of the foam formation system. The macropores exhibit median pore sizes > 0.030 mm and can typically be characterized by light microscopic image analysis.

First, the porosity of the gypsum body may be influenced. Total porosities of the gypsum body up to 98 vol.% may be achieved. The macropores have a volume fraction of 10 - 95 %, preferably 10 - 80 % and particularly preferably 25 - 70 %, in relation to the total volume of the gypsum body. Key parameters are the chemical composition of the foam formation system and the amount of the components in the foam formation system. The total porosity of the gypsum body is between 20 - 98 %, preferably 40 - 94%, more preferably 45 - 88 %, and particularly preferably 60 - 80 %, in relation to the total volume of the gypsum body and assuming a true density of the gypsum, CaSO4*2H2O, of 2320 kg/m³.

The dry density of the gypsum bodies is between 80 - 900 kg/m³, preferably 300 - 800 kg/m³, and more preferably 500 - 800 kg/m³.

Second, the type of pores may be influenced. The gypsum bodies may show predominantly open pore structure or predominantly closed-pore structure. Key parameter is the amount and composition of the foam formation system.

Third, pore size distribution may be influenced. Typically, the end use aims for a narrow and homogeneous size distribution. This is an inherent property provided by the use of the water-gypsum-dispersion according to the invention using the foam formation system.

The size of the macropores can be influenced by selecting the mixing ratio of the foam formation system and the gypsum suspension as well as of the components of the foam formation system, optionally further additives, and the conditions under which the wet foam is formed. Generally, smaller pores are formed with increasing concentration of partially hydrophobized particles (b) in the gypsum suspension and with partially hydrophobized particles (b) with increasing concentration of amphiphilic molecules (b.2) being adsorbed to the particles (b.1). In addition, the diameter of the pores can be reduced if formulations of higher viscosity are foamed. In this way, a median diameter d50 of the macropores between 0.1 mm and 5 mm can be set in a controlled manner.

The term "median pore size d50" (of the macropores as defined herein) is given in mm. The median pore size value of a foam is determined by optical image analysis. Cross-sectional images of pore structures are analyzed applying the linear intercept method using the software Lince, Linear Intercept (TU, Darmstadt, Germany). A given d50 value means that 50% of the pores are smaller than or equal to that value. A "d10"-value, for instance, means that 10% of the pores are smaller than or equal to that value and a "d90"-value means that 90% of the pores are smaller than or equal to that value. The span of the (macro)pore size distribution, "Sp" is defined by the following equation: Sp = (d90 - d10)/d50.

The median size of the macropores d50 of the gypsum body is 0.10 - 2.00 mm, preferably 0.10 - 1.00 mm, more preferably 0.15 - 0.80 mm, and particularly preferably 0.18 - 0.60 mm. According to one aspect, the size of the macropores is influenced by the choice of the mixing ratio of the components mentioned herein, for example of the components of the foam formation system, optionally further additives, as well as the conditions during the formation of the wet foam. The span of the macropore size distribution Sp is 0.5 - 2.5, preferably 0.5 - 2.0, more preferably 0.8 - 2.0 and particularly preferably 0.8 - 1.6.

The three point bending strength of the foamed gypsum body is 0.5 - 15.0 MPa, preferably 0.5 - 10.0 MPa, more preferably 0.5 - 7.0 MPa, particularly preferably 1 - 5 MPa, and alternatively 0.5 - 3.0 MPa.

The compressive strength of the foamed gypsum body is 1 - 20 MPa, preferably 1 - 15 MPa, more preferably 1 - 10 MPa, particularly preferably 1 - 7 MPa, and alternatively 1 - 4 MPa.

The porosity and thus the density of the material are defined by the concentration of blowing agent. This statement is only true under the prerequisite of an effective bubble stabilization by the foam formation system that ensures an essentially 100% capture and stabilization of the released gas in the suspension. In particular, the porosity and thus the density of the gypsum body are defined by the concentration of blowing agent if the bubble stabilization by the partially hydrophobized particles that are part of the foam formation system is effective. If the partially hydrophobized particles are well engineered and therefore effective in stabilizing the gas - water interface, an essentially 100% capture and stabilization of the released gas is ensured in the water-gypsum-dispersion during decomposition of the blowing agent.

Another advantage of the method according to the invention is that the processes of dispersing gypsum and that of pore generation in the water-gypsum-dispersion can be controlled independently of each other.

### Use

In another aspect, the invention relates to an use of a water-gypsum-dispersion according to the invention for the production of a foamed gypsum body, preferably for the production of gypsum cores and plaster boards, and wall elements.

### Examples

### Preparation of the partially hydrophobized particles

A 1000 mL LD-PE bottle was provided, filled up to 30% of its volume with 15 mm diameter alumina spheres for supporting the blending process. The particles (b.1) were filled in the bottle, the amphiphilic molecules (b.2) were pipetted on top of the powder.

The bottle was then rolled for 18 h to obtain a homogeneous blend. The partially hydrophobized particles were separated from the balls using a polymer sieve.

### Providing the foam formation system

The partially hydrophobized particles (b) were filled into a container, the catalytically active particles (a), the 1^{st} catalyst and 2^{nd} co-catalyst, were added. The blowing agent was weighed into a separate container. The foam formation systems for these examples were provided as 2-component systems.

### Preparation of the water-gypsum-dispersion and the foamed gypsum body

The gypsum raw material was compounded with the first component of the foam formation system, the solid particulate composition, namely the partially hydrophobized particles (b) and the catalytically active particles (a). Water was given to a mixing vessel, and the gypsum compound was added. Under thorough mixing, a homogeneous dispersion was obtained. Thereafter, the second component of the foam formation system, the blowing agent, was admixed and homogenized for 6 seconds. Immediately after homogenization, the dispersion was poured into a mold where the foam expansion evolved until the blowing agent was entirely decomposed. Typically, in lab scale batch experiments, the setting reaction started 4 - 8 min and ended 20 to 60 min after addition of the blowing agent. After setting, the foam was demolded and dried to constant weight at 40°C to obtain the foamed gypsum body.

**Table 1: Composition of water-gypsum-dispersions according to examples 1 to 4**

| | **Ex1** | **Ex2** | **Ex3** | **Ex4** |
|---|---|---|---|---|
| **Partially hydrophobized particles** | (%) | (%) | (%) | (%) |
| Particles (b.1), Precarb 100 (Schaefer Kalk) | 99.01 | 99.50 | 99.50 | 99.50 |
| Amphiphilic molecule (b.2), nonanoic acid | 0.99 | 0.50 | 0.50 | 0.50 |
| Total | 100.00 | 100.00 | 100.00 | 100.00 |
| | | | | |
| | | | | |

| **Foam formation system** | (%) | (%) | (%) | (%) |
|---|---|---|---|---|
| 1st catalyst, MnO₂ | 2.18 | 5.77 | 18.97 | 3.11 |
| 2nd co-catalyst, KMnO₄ | 0.63 | 1.70 | 0.37 | 4.32 |
| Partially hydrophobized particles (b) | 88.99 | 59.40 | 45.32 | 52.01 |
| Blowing agent, H₂O₂, 50% solution | 8.20 | 33.13 | 35.34 | 40.55 |
| Total | 100.00 | 100.00 | 100.00 | 100.00 |
| | | | | |
| | | | | |

| **Water-gypsum-dispersion** | (%) | (%) | (%) | (%) |
|---|---|---|---|---|
| Gypsum, α-hemihydrate | | | 67.79 | 67.91 |
| Gypsum, β-hemihydrate | 58.76 | 60.04 | | |
| Foam formation System | 1.96 | 0.74 | 0.92 | 0.80 |
| Water | 39.28 | 39.22 | 31.29 | 31.29 |
| Total | 100.00 | 100.00 | 100.00 | 100.00 |

**Table 2: Ratios of catalyst, co-catalyst and blowing agent as well as water-solids ratios in the water-gypsum-dispersion**

| | **Ex1** | **Ex2** | **Ex3** | **Ex4** |
|---|---|---|---|---|
| Foam formation system/water-gypsum-dispersion (%) | 1.96 | 0.74 | 0.92 | 0.80 |
| Partially hydrophobized particles (b)/water-gypsum-dispersion (%) | 1.74 | 0.44 | 0.42 | 0.42 |
| Ratio 1st catalyst/(a) (%) | 77.60 | 77.25 | 98.09 | 41.83 |
| Ratio 2nd co-catalyst/(a) (%) | 22.40 | 22.75 | 1.91 | 58.17 |
| Ratio (a)/blowing agent (-) | 0.34 | 0.23 | 0.55 | 0.18 |
| 1st cat/2nd co-cat (-) | 3.46 | 3.39 | 51.42 | 0.72 |
| w/s | 0.65 | 0.65 | 0.46 | 0.46 |

**Table 3: Properties of foamed gypsum bodies prepared using the water-gypsum-dispersions of Table 1**

| | **Ex1** | **Ex2** | **Ex3** | **Ex4** |
|---|---|---|---|---|
| **Results** | | | | |
| Dry total porosity (vol%) | 70.7 | 70.5 | 70.9 | 69.5 |
| Dry density (g/mL) | 681 | 685 | 676 | 708 |
| Pore size d10 (mm) | 0.100 | 0.185 | 0.298 | 0.494 |
| Pore size d50 (mm) | 0.186 | 0.623 | 0.882 | 1.562 |
| Pore size d90 (mm) | 0.379 | 1.002 | 1.546 | 2.990 |
| Span pore size distribution (-) | 1.50 | 1.31 | 1.41 | 1.60 |
| Bending strength (MPa) | 1.5 | 2.2 | 2.1 | 2.2 |
| Compressive strength (MPa) | 2.7 | 3.2 | 3.9 | |
| Foaming time (min) | | | 16.81 | 0.85 |

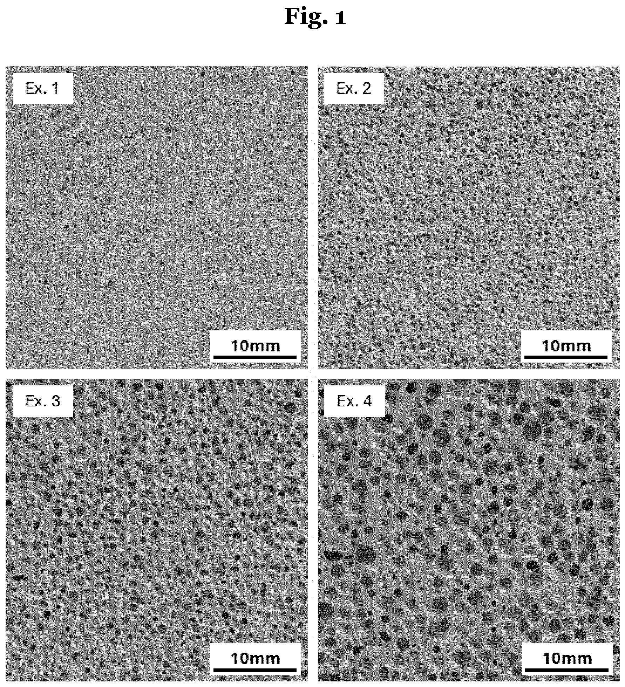

Examples 1 and 2 (Ex1, Ex2) result in porous gypsum bodies with comparable densities. However, the porous body of Example 2 exhibits a 3.3 times larger median pore size d50 (see Table 3). This is because of two different parameter settings. First, the partially hydrophobized particles (b) of Example 2 are prepared with 0.5 times the amount of amphiphilic molecules (b.2) compared to Example 1 (see Table 1). Second, the amount of foam formation system in Example 1 is 2.6 times the amount used in Example 2 (see Table 2). The comparison shows that the inventive system assures excellent control over the pore structure at comparable densities of porous gypsum bodies. Figure 1 shows photographs of the pore structure of the gypsum bodies prepared using water-gypsum-dispersions of the examples 1, 2, 3, and 4.

Examples 3 and 4 (Ex3, Ex4) yielded similar dry densities of 676 and 708 kg/m³ (see Table 3). But they were formulated with foam formation systems containing different compositions of the catalytically active particles. In Example 3 the ratio of the first catalyst to the second co-catalyst was 51.42 (see Table 2) and the foaming time was 16.81 min (see Table 3). In contrast, in Example 4 the ratio of the first catalyst to the second co-catalyst was adjusted to 0.72 (see Table 2), resulting in a foaming time of 0.85 min (see Table 3). With Examples 3 and 4 it was demonstrated how the foaming time can be controlled by adjusting the ratio of the first catalyst to the second co-catalyst. The smaller the ratio of the first catalyst to the second co-catalyst, the faster is the foaming time.

## Claims

1. Water-gypsum-dispersion comprising
- 50 - 75 % by wt. gypsum,
- a foam formation system comprising a solid particulate composition and at least one chemical blowing agent,
- water,
- optionally one or more additives,
wherein the gypsum particles and the solid particulate composition are dispersed in the water,
**characterized in that** the solid particulate composition comprises
(a) catalytically active particles and
(b) partially hydrophobized foam stabilizing particles,
- wherein the catalytically active particles (a) are selected to react with the chemical blowing agent to form a gas, and
- wherein the catalytically active particles (a) are a mixture of a first catalysts with a second co-catalyst, and
- wherein the first catalyst is a metal oxide, a metal hydroxide, a metal carbonate, a metal salt, or a mixture thereof selected from the group consisting of manganese oxides, iron oxides, and mixtures thereof, and
- wherein the second co-catalyst is selected from the group consisting of permanganates, alkali metal halides, enzymes and mixtures thereof and the co-catalyst is present in an amount of 0.5 % by wt. to 80.0 % by wt. based on the total amount of the catalytically active particles, and
- wherein the partially hydrophobized foam stabilizing particles (b) are selected from the group consisting of oxides, hydroxides, carbides, sulfates, nitrides, phosphates, carbonates, silicates (b.1), and
- wherein the partially hydrophobized foam stabilizing particles (b) are obtained by modifying the surface of the particles (b.1) with amphiphilic molecules (b.2) comprising at least a head group and a tail group, and
- wherein the amount of (b) in the solid particulate composition is in the range of 20.0-99.8% and/or the amount of (a) is in the range of 0.2-80.0%.

2. Water-gypsum-dispersion according to claim 1, **characterized in that** the first catalyst is selected from manganese oxide, either synthetically produced MnO2 or naturally occurring mineral MnO2, manganite MnO(OH), and mixtures thereof.

3. Water-gypsum-dispersion according to claim 1 or 2 **characterized in that** the second co-catalyst is selected from the group consisting of potassium permanganate, potassium iodide, catalase, preferably catalase from Micrococcus lysodeikticus, sodium permanganate, ammonium permanganate, calcium permanganate, magnesium permanganate and mixtures thereof, preferably the second co-catalyst is potassium permanganate, sodium permanganate, calcium permanganate, potassium iodide or catalase.

4. Water-gypsum-dispersion according to any one of the preceding claims, **characterized in that** the co-catalyst is present in the catalytically active particles in an amount of 0.5 % by wt. to 75.0 % by wt. based on the total weight of the catalytically active particles.

5. Water-gypsum-dispersion according to any one of the preceding claims, **characterized in that** the end group of the amphiphilic molecules is selected from an aliphatic group or an aromatic group or a cyclic group having 2 to 18 carbon atoms, preferably 2 to 12 carbon atoms, particularly preferably 2 to 9 carbon atoms, and optionally one or more substituents and that the head group of the amphiphilic molecules is selected from phosphates, phosphonates, sulphates, sulphonates, alcohols, amines, amides, pyrrolidines, gallates, carboxylic acids and the amount of amphiphilic molecules (b.2) on the particles (b.1) is in the range of 0.5 - 160.0 µmol (b.2) / m² particle (b.1).

6. Water-gypsum-dispersion according to any one of the preceding claims, **characterized in that** the particulate components of the foam formation system have a particle size from 30 nm to 500 µm, or are granulates, preferably with a granule size from 0,5 mm - 20 mm.

7. Water-gypsum-dispersion according to any one of the preceding claims consisting of
- 50 -75 % by wt. gypsum,
- a foam formation system comprising the particulate composition and at least one blowing agent,
- water,
- optionally one or more additives,
wherein the components add up to 100 % by wt..

8. Water-gypsum-dispersion according to any one of the preceding claims, **characterized in that** the foam formation system comprises the 0.02-fold to 3.00-fold amount catalytically active particles based on the amount of the blowing agent, preferably the 0.05 to 1.00 fold amount.

9. Water-gypsum-dispersion according to any one of the preceding claims, **characterized in that** the foam formation system comprises the 0.01 fold to 2.00 fold amount of the first catalyst based on the amount of the blowing agent, preferably the 0^{.}01 to 1.00 fold amount.

10. Water-gypsum-dispersion according to any one of the preceding claims, **characterized in that** the foam formation system comprises the 0.01 fold to 3.00 fold amount of the second co-catalyst based on the amount of the blowing agent, preferably the 0.01 to 2.00 fold amount.

11. Water-gypsum-dispersion according to any one of the preceding claims, **characterized in that** the blowing agent is selected from hydrogen peroxide, peroxo compounds which release oxygen in the presence of a catalyst, alkali metal peroxides, alkaline earth metal peroxides, carbonates and hydrogen carbonates, preferably selected from hydrogen peroxide, sodium bicarbonate and sodium hydrogen carbonate.

12. Water-gypsum-dispersion according to any one of the preceding claims, **characterized in that** the dispersion comprises one or more additives, and the additives are selected from the group consisting of pH adjusting agents, additives for mechanical reinforcement, fire retardants, dispersing agents, additives against positive or negative thermal expansion, additives to delay or accelerate the setting reaction and/or additives to reduce the setting expansion.

13. Method for producing a gypsum body comprising the steps of
- preparing a water-gypsum-dispersion according to any one of the preceding claims by mixing calcined gypsum with water, a foam formation system and optionally additives,
- casting the water-gypsum-dispersion on a conveyor-belt or casting the water-gypsum in a hollow mold,
- hardening the water-gypsum-dispersion to a gypsum body on the conveyor belt or in the hollow mold and
- drying the gypsum body.

14. Method according to claim 13, **characterized in that** the gypsum body has macropores and the median size of the macropores d50 of the gypsum body is 0.10 to 2.00 mm.

15. Use of a water-gypsum-dispersion according to any one of the preceding claims for the production of a foamed gypsum body, preferably for the production of gypsum cores and plaster boards, and wall elements.
